# EUROPEAN PATENT SPECIFICATION

(11) **EP 0 856 481 B1**
(45) Date of publication and mention of the grant of the patent: **26.04.2000**
(21) Application number: 98101344.4
(22) Date of filing: 27.01.1998
(51) Int. Cl.: B65G 17/12, B65G 17/16

(54) **Bucket conveyor**
Becherförderer
Transporteur à godets

(30) Priority: 29.01.1997 IT VE970004
(43) Date of publication of application: 05.08.1998
(73) Proprietor: Cusinato Giovanni S.R.L., 35015 - Galliera Veneta (IT)
(72) Inventor: Cusinato, Giovanni, 35015 Galliera Veneta (IT)
(74) Representative: Piovesana, Paolo

(56) References cited:
- EP-A- 0 532 028
- WO-A-94/10070

## Description

This invention relates to a bucket conveyor, particularly for the food industry.

Bucket conveyors particularly for the food industry are known (see, e.g. WO94/10070), used for loading, conveying and unloading loose products along the various stations. These known conveyors generally comprise a pair of chains positioned according to the desired path (horizontal, vertical, inclined, etc.) and a plurality of buckets connected at their sides to the chains in such a manner as to be able to be turned about their connection axis.

The buckets are advanced along the path such that:
- during their movement the buckets always remain, by gravity, with their cavity facing upwards,
- at the unloading stations the buckets are turned to discharge their contents into an underlying place of collection (silos, belts, vibrating sieves, other bucket conveyor, etc.). This turning is generally achieved using a pinion rigid with the conveyor and engaging a corresponding rack rigid with the conveyor support structure. In other cases, this turning is achieved by the engagement between an appendix rigid with the bucket and a cam rigid with the support structure,
- at the loading stations the buckets are brought into mutual contact to be able to fill them continuously within a short time without losing the loose product.

In a known of "continuous bucket" conveyor, during horizontal movement the buckets are always in mutual contact, with a transverse edge of one bucket to the edge of the adjacent bucket.

This conveyor suffers however from the drawback that in the unloading station the buckets can be turned only through an arc of 90° and hence complete unloading of the bucket is not guaranteed.

In another conveyor, during its advancement the buckets are spaced apart so as to be able to be turned through 360° during unloading, and to advance the chains into the loading station along a zig-zag path so that the buckets come together at their transverse edges.

This zig-zag advancement requires the use of a very flexible chain, which consequently cannot be constructed of a very strong material. This limitation leads to a series of problems, including:
- a low conveyor advancement speed (about 10 m/minute), any higher speed resulting in chain wear, particularly in those portions in which the chain links advance in zig-zag manner,
- imperfect sealing between the adjacent buckets in the loading station, with loss of the loose product, due to the inevitable elongation of an insufficiently robust chain.

An object of the invention is to provide a bucket conveyor particularly for the food industry, which allows optimum loading without loss of product in the loading station, but which at the same time has its buckets spaced apart so as to be able to be turned through 360° in the unloading station.

A further object of the invention is to provide a conveyor presenting highly sealing between the buckets in the loading region.

A further object of the invention is to provide a bucket conveyor, the advancement speed of which is much higher than that of traditional conveyors, hence considerably increasing capacity.

A further object of the invention is to provide a bucket conveyor which can use a chain of robust structure, and hence of minimum wear.

All these and further objects which will be apparent from the ensuring description are attained according to the invention by a bucket conveyor as described in claim 1.

A preferred embodiment of the invention is described in detail hereinafter with reference to the accompanying drawings, on which:

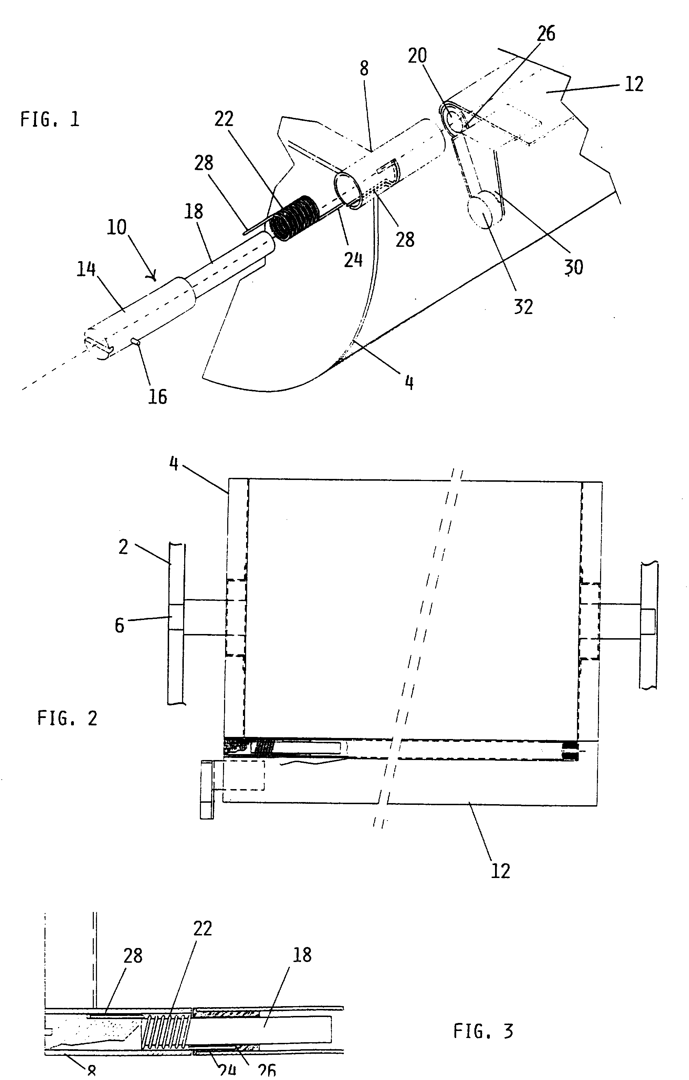

- Figure 1: is an exploded interrupted perspective view of a bucket of the conveyor according to the invention;
- Figure 2: is a plan view thereof from above;
- Figure 3: is a detailed view showing the fixing of the movable fin to the bucket edge;

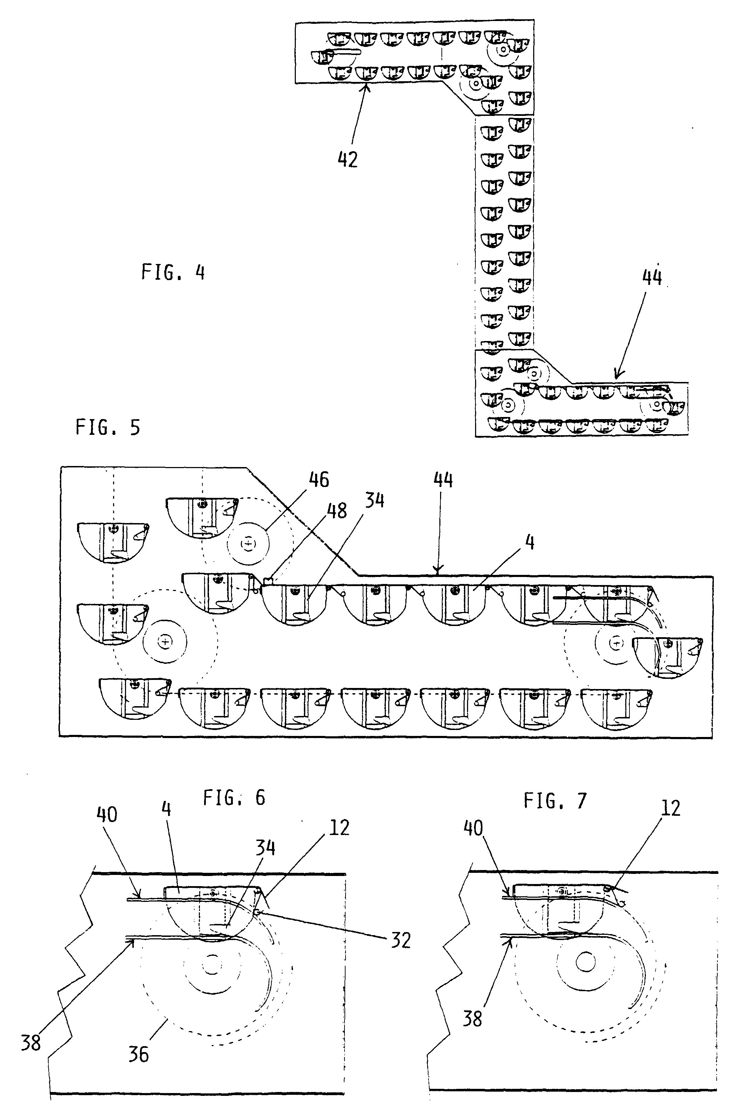

- Figure 4: is a schematic view of the conveyor along a predetermined path;
- Figure 5: is an enlarged view of the loading station;
- Figures 6 and 7: show a bucket during the raising of the fin.

As can be seen from the figures the bucket conveyor according to the invention comprises substantially a pair of parallel chains 2 arranged along the desired path (substantially of Z-shape in the illustrated example) and a plurality of buckets 4 connected to the chains in correspondence with lateral pins 6.

Each bucket is provided at one of its transverse edges with two bushes 8 in which there engage two hinge pins 10 for a fin, indicated overall by 12. Each pin 10 comprises a head 14 provided with a radial peg 16 and of dimensions enabling it to be accommodated within the bush 8, and a shank 18 of lesser diameter and engaging in a corresponding sleeve 20 provided on the fin.

Coaxial to the shank there is a coil spring 22, of which one end 24 engages in a seat 26 provided in the sleeve of the fin, and the other end 28 engages in the head 14 of the pin 10.

The lateral surface of the bush 8 is provided with a slot 28, of which a first part extends longitudinally, a second part extends along the circumference, and a third part again extends longitudinally on the same side of the circumferential part as the first part.

The fin, the width of which substantially corresponds to the distance between the facing edges of the two adjacent buckets when in the horizontal advancement condition, is provided on its smaller sides with two arms 30, each of which is provided at its free end with a block 32.

Each bucket is also provided on its sides with an angular plate 34, the purpose of which is explained hereinafter.

According to the invention, at the entry to the loading station 44 there are provided two overlying guides 38, 40 in correspondence with a deviation roller 36. Each guide comprises a respective curved portion which extends into a horizontal portion.

The bucket conveyor of the invention operates in the following manner:
firstly, the fins 12 are mounted on the buckets by inserting the pin 14 into the bush 8 and sleeve 20. The pin 14 is then constrained to the bush 8 by inserting the peg 16 into and sliding it along the initial longitudinal part of the slot 28, then rotating the pin so that the peg slides into the final part of the slot by the elastic action of the spring. This mounted configuration is such that in the absence of external stress, the fin 12 is positioned vertically.

The various buckets are then connected to the chains at a distance apart, as stated heretofore, which substantially corresponds to the width of the fin so that they can be easily turned through 360° when in the unloading station 42.

When the buckets reach the loading station 44, the angular plate 34 of each bucket interferes with the guide 38 by resting on it, to hence prevent any rotation of the bucket about the hinge pins 6. Simultaneously, the bush 32 interferes with the guide 40 so that, by overcoming the elastic action of the spring 22, the fin 12 rotates to lie substantially horizontally at the end of the curved portion and rest with its free edge on the next bucket.

At the exit from loading station, ie when the bucket is passed about the roller 46 and consequently the fin is no longer supported by the edge of the adjacent bucket, the elastic action of the spring prevails to return the fin 12 to its vertical configuration.

To ensure that all the product poured into the loading station is received by the buckets, at the exit from this station a brush 48 is provided substantially in contact with the surface of the fins when in their horizontal configuration, to collect the loose product from them in order to transfer it to the next bucket.

Cleaning of the fins is facilitated by the inclined configuration which they assume along curves, so that the product supported by them is "poured" into the next bucket.

From the aforegoing it is apparent that the bucket conveyor of the invention has numerous advantages, and in particular:
- it enables the buckets to be turned through 360° by virtue of their spaced-apart configuration,
- it enables the buckets to be filled with an optimum load in that when the buckets are bridged by the fin when in its horizontal position, they provide no path escape of the entering product (load) and prevent losses occurring,
- the buckets can be filled continuously and in a reduced time by virtue of the increased speed of the chains, which because of the absence of zig-zag movement can be constructed of robust material.

## Claims

1. A bucket conveyor, particularly for the food industry, comprising:
- a pair of parallel chains (2) arranged along the desired path,
- a plurality of buckets (4) articulatedly supported by said chains, at points spaced apart by a distance greater than the bucket width,
characterised in that each bucket (4) comprises at least one fin (12) hinged to a transverse edge and movable between a configuration of engagement with the transverse edge of the adjacent bucket and a configuration of disengagement from said edge, and further comprises movement means (40) for said fin in its passage from the one to the other configuration and vice versa.

2. A conveyor as claimed in claim 1, characterised in that each fin is movable between a substantially vertical configuration and a substantially horizontal configuration.

3. A conveyor as claimed in claim 1, characterised in that each bucket (4) comprises elastic means (22) which in the absence of external stresses maintain the fin (12) in its vertical configuration.

4. A conveyor as claimed in claim 3, characterised in that said elastic means consist of a coil spring (22) secured at its ends to said bucket (4) and to said fin (12) respectively.

5. A conveyor as claimed in claim 1, characterised in that the movement means consist of guides (40) provided at the entry to the loading station (44).

6. A conveyor as claimed in claim 5, characterised in that each fin (12) is provided with a lever arm (30) which interferes with the guide (40).

7. A conveyor as claimed in claim 1, characterised in that each bucket (4) comprises means (34) which prevent its rotation during its passage along the loading station.

8. A conveyor as claimed in claim 7, characterised in that said means consist of an angular plate (34) provided on the sides of the bucket and cooperating with a corresponding horizontal guide (38).

9. A conveyor as claimed in claim 1, characterised by comprising, in correspondence with the exit of the loading station (44), a brush (48) substantially in contact with the upper surface of the fin (12) when in its horizontal configuration.

## Patentansprüche

1. Becherförderer, insbesondere für die Nahrungsmittelindustrie, umfassend
- ein Paar paralleler Ketten (2), die entlang dem gewünschten Weg angeordnet sind,
- eine Vielzahl von Bechern (4), die von den besagten Ketten gelenkig an Stellen gehalten werden, die in einem Abstand voneinander angeordnet sind, der größer ist als die Becherbreite,
dadurch gekennzeichnet, dass jeder Becher (4) wenigstens eine Rippe (12) aufweist, die an eine Querkante angelenkt und zwischen einer Eingriffsstellung mit der Querkante des benachbarten Bechers und einer Außereingriffstellung von dieser Kante bewegbar ist und zudem Bewegungsmittel (40) für die besagte Rippe bei deren Übergang von einer in die andere Stellung und umgekehrt aufweist.

2. Förderer nach Anspruch 1, dadurch gekennzeichnet, dass jede Rippe zwischen einer im wesentlichen senkrechten Stellung und einer im wesentlichen waagrechten Stellung bewegbar ist.

3. Förderer nach Anspruch 1, dadurch gekennzeichnet, dass jeder Becher (4) elastische Mittel (22) aufweist, welche bei Abwesenheit äußerer Spannungen die Rippe (12) in ihrer senkrechten Stellung halten.

4. Förderer nach Anspruch 3, dadurch gekennzeichnet, dass die besagten elastischen Mittel aus einer Spiralfeder (22) bestehen, die mit ihren Enden an dem besagten Becher (4) bzw. an der besagten Rippe (12) gesichert ist.

5. Förderer nach Anspruch 1, dadurch gekennzeichnet, dass die Bewegungsmittel aus Führungen (40) bestehen, die am Eingang der Beladestation (44) vorgesehen sind.

6. Förderer nach Anspruch 5, dadurch gekennzeichnet, dass jede Rippe (12) mit einem Hebelarm (30) versehen ist, der mit der Führung (40) zusammenwirkt.

7. Förderer nach Anspruch 1, dadurch gekennzeichnet, dass jeder Becher (4) Mittel (34) aufweist, die seine Drehung bei seinem Durchgang entlang der Ladestation verhindern.

8. Förderer nach Anspruch 7, dadurch gekennzeichnet, dass die besagten Mittel aus einer winkelförmigen Platte (34) bestehen, die an den Seiten des Bechers vorgesehen ist und mit einer entsprechenden waagrechten Führung (38) zusammenarbeitet.

9. Förderer nach Anspruch 1, dadurch gekennzeichnet, dass er korrespondierend zum Ausgang der Ladestation (44) eine Bürste (48) aufweist, die mit der oberen Oberfläche der Rippe (12) in Berührung steht, wenn sie sich in ihrer waagrechten Stellung befindet.

## Revendications

1. Transporteur à godets, particulièrement pour l'industrie alimentaire, comprenant :
- une paire de chaînes parallèles (2) disposées le long du chemin désiré,
- une pluralité de godets (4) supportés par articulation par lesdites chaînes, en des points espacés d'une distance plus grande que la largeur des godets,
caractérisé en ce que chaque godet (4) comprend au moins un volet (12) articulé à un bord transversal et mobile entre une position en contact avec le bord transversal du godet adjacent et une position désengagée dudit bord, et comprend en outre un moyen de déplacement (40) dudit volet pour passer de l'une à l'autre position et vice versa.

2. Transporteur comme revendiqué dans la revendication 1, caractérisé en ce que chaque volet est mobile entre une position sensiblement verticale et une position sensiblement horizontale.

3. Transporteur comme revendiqué dans la revendication 1, caractérisé en ce que chaque godet (4) comprend un moyen élastique (22) qui en l'absence de contraintes externes maintient le volet (12) dans sa position verticale.

4. Transporteur comme revendiqué dans la revendication 3, caractérisé en ce que ledit moyen élastique consiste en un ressort hélicoïdal (22) fixé par ses extrémités audit godet (4) et audit volet (12) respectivement.

5. Transporteur comme revendiqué dans la revendication 1, caractérisé en ce que le moyen de déplacement consiste en des guides (40) prévus à l'entrée de la station de chargement (44).

6. Transporteur comme revendiqué dans la revendication 5, caractérisé en ce que chaque volet (12) est muni d'un bras de levier (30) qui coopère avec le guide (40).

7. Transporteur comme revendiqué dans la revendication 1, caractérisé en ce que chaque godet (4) comprend des moyens (34) qui empêchent sa rotation pendant son passage le long de la station de chargement.

8. Transporteur comme revendiqué dans la revendication 7, caractérisé en ce que lesdits moyens consistent en une plaque angulaire (34) prévue sur les côtés du godet et coopérant avec un guide horizontal correspondant (38).

9. Transporteur comme revendiqué dans la revendication 1, caractérisé en ce qu'il comprend, en correspondance avec la sortie de la station de chargement (44), un balai (48) sensiblement en contact avec la surface supérieure du volet (12) lorsqu'il est en position horizontale.
